# EUROPÄISCHE PATENTSCHRIFT

(11) **EP 4 351 391 B1**
(45) Veröffentlichungstag und Bekanntmachung des Hinweises auf die Patenterteilung: **04.06.2025**
(21) Anmeldenummer: 22836140.8
(22) Anmeldetag: 14.12.2022
(51) Int. Cl.: A47J 31/40, A47J 31/60

(54) **VORRICHTUNG UND VERFAHREN ZUR HERSTELLUNG EINER LÖSUNG AUS EINER WIRKSUBSTANZ UND EINEM LÖSEMITTEL UND ZUR ZUFÜHRUNG DER LÖSUNG ZU EINER GETRÄNKEZUBEREITUNGSMASCHINE**
DEVICE AND METHOD FOR PRODUCING A SOLUTION FROM AN ACTIVE SUBSTANCE AND A SOLVENT AND FOR SUPPLYING THE SOLUTION TO A DRINKS PREPARATION MACHINE
DISPOSITIF ET PROCÉDÉ DE PRODUCTION D'UNE SOLUTION À PARTIR D'UNE SUBSTANCE ACTIVE ET D'UN SOLVANT ET DE FOURNITURE DE LA SOLUTION À UNE MACHINE DE PRÉPARATION DE BOISSONS

(30) Priorität: 16.12.2021 DE 202021106869 U
(43) Veröffentlichungstag der Anmeldung: 17.04.2024
(73) Patentinhaber: Eversys S.A., 3960 Sierre (CH)
(72) Erfinder: SCHINDLER, Thorsten, 3970 Salgesch (CH); BESSE, Jonathan, 1955 Chamoson (CH); LOCHER, Grégoire, 1976 Daillon (CH); ROBYR, Sébastien, 3960 Sierre (CH); CONSTANTIN, David, 3968 Veyras (CH)
(74) Vertreter: Charrier Rapp & Liebau
(86) Internationale Anmeldenummer: PCT/EP2022/085772
(87) Internationale Veröffentlichungsnummer: WO 2023/110972

(56) Entgegenhaltungen:
- CH-B1- 709 738
- DE-A1- 3 117 490
- US-A- 5 551 988
- US-A1- 2014 060 338

## Beschreibung

Die Erfindung betrifft eine Vorrichtung zur Herstellung einer Lösung aus einer Wirksubstanz und einem Lösemittel und zur Zuführung der Lösung zu einer Getränkezubereitungsmaschine nach dem Oberbegriff des Anspruchs 1, sowie ein Verfahren zur Herstellung einer Wirksubstanzlösung und Zufuhr der Wirksubstanzlösung zu einer Getränkezubereitungsmaschine.

Zur Reinigung von Getränkezubereitungsmaschinen, wie zum Beispiel von halb- oder vollautomatischen Kaffeemaschinen, sind aus dem Stand der Technik Reinigungsvorrichtungen bekannt, die in die Getränkezubereitungsmaschine integriert sind. Die Reinigungsvorrichtung wird dabei in vorgegebenen Reinigungszyklen sowohl während des Betriebs als auch nach dem Ausschalten der Getränkezubereitungsmaschine eingesetzt, um beispielsweise die kaffee- und milchführenden Bauteile von Kaffee- und Milchresten sowie von Verunreinigungen zu reinigen und die Getränkezubereitungsmaschine auf diese Weise stets unter einwandfreien hygienischen Bedingungen zu halten. Die Reinigungszyklen können dabei entweder von einem Bediener manuell gestartet oder automatisch von einer Steuerung der Getränkezubereitungsmaschine eingeleitet werden.

Zur automatischen Reinigung von Getränkezubereitungsmaschinen sind aus dem Stand der Technik Reinigungsvorrichtungen bekannt, in denen eine Kartusche mit einem darin eingefügten Reinigungsmittel eingesetzt wird. Eine solche Reinigungsvorrichtung ist bspw. aus der DE 10 2015 108 438 A1 bekannt, in der eine mit einem Reinigungsmittel gefüllte Kartusche an eine Flüssigkeitszufuhr zur Heißgetränkebereitung in der Getränkezubereitungsmaschine angeschlossen wird, um eine Flüssigkeit, insbesondere Wasser, in die Kartusche zu leiten und das in der Kartusche befindliche feste Reinigungsmittel aufzulösen. Dabei kann sichergestellt werden, dass ein Bediener der Getränkezubereitungsmaschine nicht in Kontakt mit dem aggressiven Reinigungsmittel kommt, da dieses in der Kartusche abgeschlossen bevorratet ist. Die Auflösung des sich in der Kartusche befindlichen Reinigungsmittels in der Flüssigkeit, welche der Kartusche zugeführt wird, ist dabei jedoch häufig unvollständig, weil das durch die Kartusche geleitete Wasser das feste Reinigungsmittel nicht vollständig in eine flüssige Reinigungsmittellösung umwandeln kann. Dies erschwert eine genaue Dosierung einer für die Durchführung eines Reinigungszyklus erforderlichen Menge des Reinigungsmittels bzw. einer hierfür erforderlichen Konzentration des Reinigungsmittels in einer Reinigungsmittellösung, die durch das Auflösen des Reinigungsmittels in der Flüssigkeit erzeugt wird. Darüber hinaus weisen Reinigungsvorrichtungen mit Reinigungsmittelkartuschen Nachteile unter dem Gesichtspunkt der Abfallvermeidung auf, denn die entleerten Kartuschen, welche regelmäßig ein Kunststoffgehäuse aufweisen, sind für den Einmalgebrauch vorgesehen und müssen entsorgt werden.

Eine weitere Vorrichtung zur Reinigung einer Kaffeemaschine mit einem Wassertank, einer Heizeinrichtung, einer Brühleinheit und eines Wasserleitungssystems mit einer Förderpumpe zum Fördern von Wasser aus dem Wassertank durch das Wasserleitungssystem ist aus der DE 10 2011 054 601 A1 bekannt, wobei die Reinigungsvorrichtung eine Kammer für ein Entkalkungs- und/oder Reinigungsmittel umfasst, welche an das Wasserleitungssystem anschließbar oder zuschaltbar ist, so das Wasser aus dem Wassertank mittels der Förderpumpe der Kaffeemaschine durch die Kammer in das Wasserleitungssystem der Kaffeemaschine gefördert werden kann. Diese Reinigungsvorrichtung soll zwar eine vollständige Auflösung und Vermischung des Entkalkungs-und/oder Reinigungsmittels ermöglichen, indem das sich in der Kammer befindliche Mittel durch Einleitung und durch Transport von Wasser durch die Kammer in einer wässrigen Lösung aufgelöst wird und die wässrige Lösung aus der Kammer in das Wasserleitungssystem der Kaffeemaschine geleitet wird, um insbesondere die Brüheinheit und/oder die Heizeinrichtung mit der Reinigungsmittellösung zu reinigen. Auch bei dieser Vorrichtung ist jedoch eine genaue Dosierung der für einen Reinigungsvorgang benötigten Menge des Reinigungsmittels bzw. der Konzentration des Reinigungsmittels in der Reinigungsmittellösung schwierig.

Zur genauen Dosierung einer bestimmten Menge eines für die Durchführung eines Reinigungsvorgangs in einer Getränkezubereitungsmaschine benötigten Reinigungsmittels sind aus dem Stand der Technik Reinigungsvorrichtungen mit einer Dosiereinrichtung für das Reinigungsmittel bekannt, wobei der Dosiereinrichtung ein festes Reinigungsmittel, beispielsweise in Pulver-, Granulat-, Festkörper- oder Tablettenform zugeführt wird. Aus der EP 1 210 894 B1 ist beispielsweise eine Getränkemaschine, insbesondere eine Kaffeemaschine, mit einer Eintragseinrichtung für festes Reinigungsmittel, insbesondere in Presskörperform bekannt, in der eine selbsttätig dosierende, in sich geschlossene Dosiereinrichtung für das Reinigungsmittel vorgesehen ist. Die Dosiereinrichtung umfasst dabei einen Vorratsbehälter für das feste Reinigungsmittel und eine Dosiereinheit mit einer bewegbaren Dosierkammer, durch die eine vorbestimmte Menge des Reinigungsmittels aus dem Vorratsbehälter in einen Auslauf förderbar ist.

Ein weiteres Reinigungssystem für einen Getränkeautomaten, insbesondere eine Kaffeemaschine, ist aus der EP 2 584 946 B1 bekannt, wobei das Reinigungssystem eine Reinigungseinrichtung zur periodischen Reinigung der mit den Getränken in Kontakt tretenden Bauteilen mittels einer Reinigungsflüssigkeit enthält. Zur Herstellung der Reinigungsflüssigkeit wird in der Reinigungseinrichtung ein festes Reinigungsmittel, das insbesondere Kugel- oder Tablettenform aufweisen kann, in der Reinigungsflüssigkeit aufgelöst. Die Reinigungseinrichtung umfasst eine gesteuerte Dosierungsvorrichtung mit einer Dosierschranke, welche die Reinigungskugeln oder -Tabletten, die in einem Vorratsbehälter bevorratet sind, in einen Abgabeschacht mit einer Dosieröffnung freigibt. Zwischen dem Vorratsbehälter und dem Abgabeschacht sind dabei zwei gegenläufig angetriebene Dosierschnecken angeordnet, durch welche die Reinigungskugeln oder -Tabletten einzeln in den Abgabeschacht gefördert werden können.

Die US 5 551 988 offenbart ein Verfahren zur Reinigung einer Brühvorrichtung, insbesondere einer Kaffeemaschine, wobei für den Reinigungsvorgang Wasser von einem Wasserbehälter oder von einem externen Wasseranschluss über eine Zuführungsleitung dem Wasseranschluss eines Brühzylinders zugeführt wird, und in mindestens einer Reinigungsphase Wasser durch Spülkanäle vom Brühzylinder in Bereiche außerhalb des Brühzylinders geleitet wird, wobei in einer ersten Phase das Wasser über den Wasseranschluss in den Brühzylinder und von diesem über eine Abflussleitung in einem im Brühzylinder beweglich angeordneten Brühkolben zu einem externen Wasserbehälter geleitet werden kann, wobei der Brühkolben die Spülkanäle überdeckt, und in einer zweiten Phase das im Brühzylinder befindliche Wasser durch Anheben eines beweglich im Brühzylinder angeordneten Ausstoßkolbens und den gleichzeitig zurückgezogenen Brühkolben über den Rand des Brühzylinders ausfließen kann. In einer weiteren Phase des Reinigungsverfahrens kann ein chemischer und/oder biologischer Reinigungsprozess stattfinden, wofür über einen Pulverschacht ein Reinigungsmittel in den Brühzylinder eingeworfen und Wasser in den Brühzylinder eingeleitet wird.

Die aus dem Stand der Technik bekannten Reinigungsvorrichtungen mit einer Dosiereinrichtung zur dosierten Zufuhr eines festen Reinigungsmittels ermöglichen einerseits eine einfache und sichere Handhabung des Reinigungsmittels sowie eine genaue Dosierung der für einen Reinigungsvorgang benötigten Menge an Reinigungsmittel und eine exakt dosierte Wirkstoffkonzentration des Reinigungsmittels in einer Reinigungsflüssigkeit, die durch Auflösen des festen Reinigungsmittels erzeugt wird.

In Getränkezubereitungsmaschinen werden neben Reinigungslösungen auch noch andere Arten von Lösungen einer Wirksubstanz in einem Lösemittel benötigt, wie z.B. Entkalkungslösungen, Lösungen von Aroma- oder Geschmacksstoffen, Lösungen von Pulvern oder Granulaten, wie z.B. Milch-, Zucker- oder Schokopulver in flüssigen Lösungsmitteln wie Wasser oder Milch. Es besteht daher weiterhin ein Bedürfnis für eine Vorrichtung zur Herstellung einer Lösung aus einer Wirksubstanz und einem Lösemittel und zur Zuführung der Lösung zu einer Getränkezubereitungsmaschine, welche eine homogene Durchmischung oder eine vollständige Auflösung der Wirksubstanz im Lösemittel mit einer genauen Wirksubstanz-Konzentration sowie sichere Zufuhr der Lösung zur Getränkezubereitungsmaschine gewährleistet.

Hiervon ausgehend besteht ein Bedürfnis für eine Vorrichtung zur Herstellung einer Lösung aus einer Wirksubstanz und einem Lösemittel und zur Zuführung der hergestellten Lösung zu einer Getränkezubereitungsmaschine, die eine vollständige Auflösung der Wirksubstanz, welche beispielsweise in Pulver- oder Tablettenform mittels einer Dosiereinrichtung zugeführt wird, in dem Lösemittel ermöglicht, um eine optimale Konzentration der Wirksubstanz in der Lösung mit einer homogenen Konzentrationsverteilung über das Volumen einer Dosis der Lösung zu erzeugen. Dabei soll insbesondere eine vollständige Auflösung oder eine homogene Vermischung der Wirksubstanz in der Lösung erzielt werden. Weiterhin soll der Verbrauch an Wirksubstanz minimiert werden. Die Vorrichtung soll dabei vollautomatisch durch eine Steuereinrichtung der Getränkezubereitungsmaschinen steuerbar sein, um beispielsweise vorprogrammierte Reinigungszyklen oder Produktionszyklen zur Herstellung von Getränken vollautomatisch mit einer exakten Dosierung des für den Reinigungs- oder Produktionszyklus benötigten Menge der Wirksubstanz mit einer optimalen Wirksubstanz-Konzentration in der Lösung in einer für den Reinigungs- oder Produktionszyklus benötigten Dosis der Lösung durchführen zu können.

Die der Erfindung zugrundeliegende Aufgabe besteht daher in der Bereitstellung einer solchen Vorrichtung zur Herstellung einer Lösung aus einer Wirksubstanz und einem Lösemittel und zur Zuführung der Lösung zu einer Getränkezubereitungsmaschine, mit der unterschiedliche Lösungen aus verschiedenen Wirksubstanzen und Lösemitteln herstellbar und an eine Getränkezubereitungsmaschine überführbar sind. Die Wirksubstanz soll dabei in fester Form, beispielsweise in Pulver- oder Tablettenform, oder in flüssiger Form vorliegen können und es sollen unterschiedliche Lösemittel in flüssiger Form, insbesondere Wasser oder Milch, zur Herstellung der Lösung eingesetzt werden können. Dabei soll insbesondere eine vollständige Auflösung sowie eine optimale Konzentration der Wirksubstanz im Lösemittel mit einer homogenen Konzentrationsverteilung über das Volumen der Lösung erzielt werden. Die Vorrichtung soll dabei vollautomatisch durch eine Steuereinrichtung der Getränkezubereitungsmaschinen steuerbar sein, um beispielsweise vorprogrammierte Vorgänge, wie z.B. Reinigungs- oder Entkalkungsvorgänge oder Vorgänge zur Zubereitung von Getränken, vollautomatisch mit einer exakten Konzentration der Wirksubstanz und der für den jeweiligen Vorgang benötigten Menge der Lösung durchführen zu können.

Diese Aufgaben werden mit der Vorrichtung zur Herstellung einer Lösung aus einer Wirksubstanz und einem Lösemittel und zur Zuführung der Lösung zu einer Getränkezubereitungsmaschine mit den Merkmalen des Anspruchs 1 sowie mit dem Verfahren zur Zufuhr einer Wirksubstanz-Lösung zu einer Getränkezubereitungsmaschine mit den Merkmalen des Anspruchs 13 gelöst. Zur Lösung der Aufgabe trägt ferner eine Getränkezubereitungsmaschine bei, welche mit einer Vorrichtung gemäß der Erfindung ausgestattet ist. Bevorzugte Ausführungsformen der Vorrichtung, der mit der Vorrichtung ausgestatteten Getränkezubereitungsmaschine und des Verfahrens sind den abhängigen Ansprüchen zu entnehmen.

Die Vorrichtung gemäß der Erfindung umfasst eine Lösekammer zur Aufnahme einer Wirksubstanz sowie ein mit der Lösekammer gekoppeltes Flüssigkeitsleitungssystem mit einer an einen Lösemittelvorrat anschließbaren Lösemittelleitung zur Zufuhr des Lösemittels und einer an die Lösekammer angeschlossene Abflussleitung, welche mit der Getränkezubereitungsmaschine verbindbar ist, wobei eine Kolbeneinheit, welche einen in die Lösekammer einführbaren ersten Kolben, einen zweiten Kolben und eine zwischen dem ersten Kolben und dem zweiten Kolben angeordnete Verbindungsleitung umfasst, vorgesehen ist.

Durch die Lösemittelleitung kann das flüssige Lösemittel, bei dem es sich insbesondere um Wasser, Milch oder Alkohol handelt, in die Lösekammer geleitet werden, um eine sich darin befindliche vorgegebene Menge der Wirksubstanz in einer Wirksubstanzlösung aufzulösen. Der in die Lösekammer einführbare erste Kolben ermöglicht dabei eine gute und homogene Durchmischung der Wirksubstanz in der Wirksubstanzlösung und der Kolben verschließt außerdem einen Wirksubstanzzugang in die erste Kammer, durch den die Wirksubstanz zugeführt wird, wenn der Kolben in die Lösekammer in einer Betriebsposition eingeführt ist. Wenn sich der erste Kolben in seiner Betriebsposition in der Lösekammer befindet, kann das Lösemittel über die Lösemittelleitung in die Lösekammer eingeleitet werden, um die sich in der Kammer befindliche Menge der Wirksubstanz in der Wirksubstanzlösung aufzulösen. Hierfür ist der erste Kolben bevorzugt beweglich zwischen einer oberen Grundposition, in der der erste Kolben aus der Lösekammer herausgezogen ist, und der unteren Betriebsposition, in der sich der erste Kolben in der Lösekammer befindet, in der Lösekammer angeordnet. Dadurch wird einerseits eine vollständige Auflösung und eine homogene Vermischung der Wirksubstanz in der Wirksubstanzlösung sowie eine homogene Konzentration der Wirksubstanz in einem vorgegebenen Volumen der Wirksubstanzlösung ermöglicht und andererseits sichergestellt, dass während des Auflösens oder Vermischens der Wirksubstanz keine weitere Wirksubstanz in die Kammer gelangen kann, weil der Wirksubstanzzugang der Kammer durch den in die Lösekammer eingeschobenen Kolben verschlossen ist.

Bei der Wirksubstanz kann es sich bspw. um ein Reinigungs- oder Entkalkungsmittel oder um Zutaten für Getränke wie z.B. Zucker, Sirup oder andere Konzentrate, Milch- oder Schokopulver, Aroma- oder Geschmacksstoffe oder um alkoholhaltige Getränke handeln.

Gemäß der Erfindung ist der erste Kolben Bestandteil einer Kolbeneinheit, welche den ersten Kolben, einen zweiten Kolben und eine zwischen dem ersten Kolben und dem zweiten Kolben angeordnete und die beiden Kolben verbindende Verbindungsleitung umfasst. Dabei ist der zweite Kolben beweglich in einer Vorkammer angeordnet, wobei die Vorkammer in Strömungsrichtung des über die Lösemittelleitung zugeführten Lösemittels gesehen insbesondere stromaufwärts der Lösekammer angeordnet ist und über die Verbindungsleitung fluidleitend mit der Lösekammer in Verbindung steht. Über die Verbindungsleitung wird eine Bewegung des zweiten Kolbens in der Vorkammer auf den ersten Kolben übertragen. Die Lösemittelleitung ist dabei bevorzugt an einem Einlaufstutzen der Vorkammer angeschlossen. Diese Anordnung ermöglicht eine selbsttätige Bewegung des ersten und des damit über die Verbindungsleitung verbundenen zweiten Kolbens in der Lösekammer bzw. der Vorkammer, wenn Lösemittel durch die Lösemittelleitung in die Vorkammer eingeleitet wird. Durch den Druck des eingeleiteten Lösemittels wird der zweite Kolben in der Vorkammer aus einer Grundposition in eine Betriebsposition bewegt, insbesondere von oben nach unten, und der erste Kolben bewegt sich dabei ebenfalls in seine Betriebsposition, während das Lösemittel durch die Verbindungsleitung von der Vorkammer in die Lösekammer strömen kann, um die Lösekammer mit Lösemittel zu füllen und die sich darin befindliche Menge der Wirksubstanz im Lösemittel aufzulösen oder mit dem Lösemittel zu vermischen, um eine Wirksubstanzlösung zu erzeugen.

Zur Vorspannung der Kolbeneinheit umfasst diese bevorzugt ein Federelement, welches den zweiten Kolben in der Vorkammer in seiner Grundposition vorspannt. Bei Einleiten von Lösemittel in die Vorkammer wird das Federelement durch den Druck des Lösemittelstroms entgegen seiner Rückstellkraft zusammengedrückt, wodurch der zweite Kolben und der erste Kolben in ihre jeweilige Betriebsposition gebracht werden. Das Federelement ist dabei zweckmäßig zwischen dem ersten Kolben und dem zweiten Kolben und insbesondere um die rohrförmige Verbindungsleitung herum angeordnet und das Federelement stützt sich bevorzugt an einer Stütze in der Vorkammer ab. Die Stütze ist bevorzugt in einem Endbereich der Vorkammer angeordnet, insbesondere an einem Boden der Vorkammer, wobei sich das Federelement zwischen der Stütze und einer Stirnfläche, insbesondere der unteren Stirnfläche, des zweiten Kolbens, erstreckt. Durch diese Anordnung übt das Federelement in einem unbelasteten Zustand eine Vorspannung auf den ersten und den zweiten Kolben aus, die den ersten und den zweiten Kolben jeweils in seiner Grundposition hält, wobei der erste Kolben in seiner Grundposition aus der Lösekammer herausgezogen ist und sich der zweite Kolben in seiner Grundposition innerhalb der Vorkammer in einer (oberen) Grenzstellung befindet, in der der zweite Kolben an einem (oberen) Anschlag der Vorkammer anliegt.

Um beim Einleiten von Lösemittel durch die Lösemittelleitung eine sichere Bewegung des ersten Kolbens in seine Betriebsposition zu gewährleiten und um den ersten Kolben während der Einleitung von Lösemittel in dieser Betriebsposition zu halten, weist die Vorkammer bevorzugt einen größeren Querschnitt und insbesondere einen größeren Durchmesser als die Lösekammer auf und entsprechend weist bevorzugt auch der zweite Kolben einen größeren Querschnitt und insbesondere einen größeren Durchmesser als der erste Kolben auf. Durch den größeren Querschnitt des ersten Kolbens gegenüber dem Querschnitt des zweiten Kolbens ist die Gegenkraft, die durch das in die Lösekammer eingeleitete Lösemittel auf den ersten Kolben, insbesondere auf dessen untere Stirnfläche ausgeübt wird, kleiner als die vom Druck des Lösemittelstroms auf den zweiten Kolben, insbesondere auf dessen obere Stirnfläche, ausgeübte Kraft, wodurch der erste und der zweite Kolben jeweils in ihrer Betriebsposition gehalten werden, solange Lösemittel über die Lösemittelleitung eingeleitet wird.

Bevorzugt ist in der Lösemittelleitung wenigstens ein Ventil, insbesondere ein Sperrventil und/oder ein Regelventil, insbesondere ein Druckregelventil, und/oder ein Druckminderer angeordnet. Die Anordnung eines Sperrventils ermöglicht ein Öffnen und Schließen der Lösemittelleitung und dadurch das Einleiten von Lösemittel in die Vorrichtung und ein Stoppen der Lösemittelzufuhr. Die Anordnung eines Druckregelventils und/oder eines Druckminderers in der Lösemittelleitung ermöglicht die Einstellung eines vorgegebenen Drucks des Lösemittelstroms, der bevorzugt im Bereich von 3 bis 10 bar liegt.

Zur Abdichtung der ersten und der Vorkammer weist der erste Kolben und der zweite Kolben bevorzugt jeweils mindestens ein Dichtelement auf, wobei das Dichtelement des ersten Kolbens dichtend an einer Innenwand der Lösekammer und das Dichtelement des zweiten Kolbens dichtend an einer Innenwand der Vorkammer anliegt.

Zur Zuführung einer vorgegebenen Menge an Wirksubstanz weist die Lösekammer bevorzugt wenigstens einen Wirksubstanzzugang auf, wobei der Wirksubstanzzugang zweckmäßig in einem oberen Bereich oder an einem oberen Ende der Lösekammer angeordnet ist. Der oder jeder Wirksubstanzzugang umfasst dabei eine Öffnung in einer Wandung der Lösekammer, durch welche die Wirksubstanz, die bspw. in Form von Tabletten oder Kugeln oder auch als Granulat, Pulver oder Flüssigkeit vorliegt, in die Lösekammer eingebracht werden kann.

Bevorzugt befindet sich der erste Kolben in seiner Betriebsposition soweit in der Lösekammer, dass ein Zugang des Wirksubstanzzugangs in die Lösekammer versperrt ist. Dies stellt sicher, dass während des Einleitens von Lösemittel in die Lösekammer keine weitere Wirksubstanz in die Lösekammer eingebracht werden kann, wodurch eine exakte Dosierung der Wirksubstanzmenge in der Lösekammer und eine genaue Konzentrierung der Wirksubstanz in der Wirksubstanzlösung sichergestellt wird.

Zweckmäßig ist der Wirksubstanzzugang mit einem Spender oder einer Dosiervorrichtung gekoppelt, um eine vorgegebene Menge der Wirksubstanz durch den Wirksubstanzzugang in die Lösekammer zu dosieren. Bei dem Spender oder der Dosiervorrichtung handelt es sich bevorzugt um einen Spender, mit dem eine feste Wirksubstanz, bspw. in Form von Kugeln oder Tabletten, welche in einem Vorratsbehälter bevorratet sind, dem Wirksubstanzzugang einzeln zugeführt werden können. Eine solche Dosiervorrichtung ist bspw. aus der EP 2 584 946 B1 bekannt. Dies gewährleistet eine exakte Dosierung der über den Wirksubstanzzugang in die Lösekammer eingebrachten Menge der Wirksubstanz. Dabei ist es bspw. möglich, eine vorgebbare Anzahl an Wirksubstanz-Kugeln oder -Tabletten in die Lösekammer einzubringen, so dass über die Anzahl der Kugeln oder Tabletten verschiedene Konzentrationen der Wirksubstanz in einer durch das verfügbare Volumen der Lösekammer vorgegeben Dosis der Wirksubstanzlösung erzeugt werden können.

Zur Ausleitung der in der Lösekammer erzeugten Wirksubstanzlösung in eine mit dem Leitungssystem der Getränkezubereitungsmaschine verbundene Abflussleitung umfasst die Vorrichtung bevorzugt eine Druckgasleitung, welche mit einer Druckgasquelle koppelbar ist. Bevorzugt ist hierfür die Vorkammer mit der Druckgasleitung verbunden, wobei die Druckgasleitung zweckmäßig in einem oberen Abschnitt oder an einer Oberseite in die Vorkammer mündet. Die Druckgasleitung kann alternativ auch in die Lösemittelleitung münden. Über die Druckgasleitung kann nach Beendigung der Lösemittelzufuhr und bevorzugt nach einem vollständigen Auflösen der Wirksubstanz in der Wirksubstanzlösung ein komprimiertes Gas (Druckgas), bspw. Druckluft, in die Vorrichtung und insbesondere in die Vorkammer und über die Verbindungsleitung in die Lösekammer, eingeleitet werden, um die in der Lösekammer erzeugte Wirksubstanzlösung in die an die Lösekammer angeschlossene Abflussleitung zu drücken.

In der Abflussleitung ist bevorzugt ein Sperrventil und/oder ein Regelventil angeordnet, um die Abflussleitung öffnen und schließen oder einen bestimmten Strömungsquerschnitt in der Abflussleitung einstellen zu können. Über ein in der Abflussleitung angeordnetes Regelventil lässt sich der Volumenstrom der abgeführten Wirksubstanzlösung und/oder der Druck in der Lösekammer einstellen.

Die Vorrichtung kann dabei - je nach Stellung des Sperr- oder Regeventils in der Abflussleitung - in einem kontinuierlichen Betrieb oder in einem Batchbetrieb betrieben werden. Beim kontinuierlichen Betrieb ist das Sperr- oder Regeventil in der Abflussleitung zumindest teilweise geöffnet, während kontinuierlich Lösemittel durch die Lösekammer geleitet wird, wodurch die Wirksubstanz in der Lösekammer in einer Wirksubstanzlösung aufgelöst oder vermischt und die Wirksubstanzlösung direkt und kontinuierlich durch die geöffnete Abflussleitung zur Getränkezubereitungsmaschine abgeführt wird. Dabei ist die Verwendung eines Regelventils in der Abflussleitung vorteilhaft, weil durch die Stellung des Regeventils der Strömungsquerschnitt in der Abflussleitung eingestellt werden kann. Durch eine Veränderung des Strömungsquerschnitts in der Abflussleitung kann der Volumenstrom der Wirksubstanzlösung sowie die Konzentration der Wirksubstanz in der Wirksubstanzlösung angepasst werden. Eine in der Verbindungsleitung angeordnete Düse sorgt dabei dafür, dass die Kolbeneinheit und insbesondere der erste Kolben in einer vorgegebenen Betriebsposition gehalten wird, unabhängig von der Stellung des Regelventils in der Abflussleitung.

Beim Batchbetrieb ist das Sperr- oder Regeventil in der Abflussleitung geschlossen, während Lösemittel mit einem vorgegebenen Druck über die Lösemittelleitung in die Lösekammer geleitet wird. Zur Einstellung eines bestimmten Drucks des Lösemittelstroms ist dabei bevorzugt ein Druckregelventil und/oder ein Druckminderer in der Lösemittelleitung angeordnet. Über den Druck des Lösemittelstroms kann in dem Batchbetrieb der Vorrichtung bei geschlossener Abflussleitung in der Betriebsposition die genaue Stellung des ersten Kolbens in der Lösekammer eingestellt werden. Die Stellung des ersten Kolbens in der Betriebsposition bestimmt dabei das Volumen in der ersten Kammer, in dem die Wirksubstanzlösung durch Auflösen oder Vermischen der Wirksubstanz erzeugt wird. Die Stellung des ersten Kolbens in der Betriebsposition legt daher das Volumen einer Dosis der Wirksubstanzlösung fest, die für die Durchführung eines Vorgangs in der Getränkezubereitungsmaschine von der Vorrichtung zur Verfügung gestellt wird. Nach Beendigung des Auflösens oder Vermischens der Wirksubstanz in der Wirksubstanzlösung wird die Wasserzufuhr durch Verschließen des Sperr- oder Regeventil in der Abflussleitung gestoppt und die sich in der Lösekammer befindliche Dosis der Wirksubstanzlösung wird bei geöffnetem Ventil in der Abflussleitung durch Einleitung eines komprimierten Gases, bspw. Druckluft, in die Lösekammer zur Getränkezubereitungsmaschine geleitet. Dabei kann der Volumenstrom der Wirksubstanzlösung, die der Getränkezubereitungsmaschine zugeführt wird, durch die Stellung eines in der Abflussleitung angeordneten Regelventils eingestellt werden.

Zur Steuerung eines Vorgang in der Getränkezubereitungsmaschine, bspw. eines Reinigungsvorgangs, ist die Vorrichtung bevorzugt mit einer Steuereinrichtung der Getränkezubereitungsmaschine gekoppelt, welche zu vorgegebenen Zeiten und/oder Ereignissen, bspw. dem Ein- oder Ausschalten der Getränkezubereitungsmaschine, nach einer Getränkeauswahl eines Bedieners oder nach einer vorgegebenen Anzahl von Getränkebezügen, automatisch einen Vorgang einleitet, bspw. einen Reinigungs- oder Entkalkungsvorgang oder die Herstellung eines vom Bediener ausgewählten Getränks. Dabei können auch verschiedene solcher Vorgänge in der Steuereinrichtung programmiert sein oder werden, wobei bevorzugt jedem Vorgang eine bestimmte Dosierung und/oder Konzentration der Wirksubstanzlösung zugeordnet ist, die für die Durchführung des Vorgangs in der Getränkezubereitungsmaschine benötigt wird. Bevorzugt ist die Steuereinrichtung programmierbar, so dass ein Bediener individuell nach seinen Bedürfnissen oder in Abhängigkeit der mit der Getränkezubereitungsmaschine erzeugten Getränke bestimmte Vorgänge und Zyklen einstellen kann.

Zur Ansteuerung der Vorrichtung sind die in der Lösemittelleitung und in der Abflussleitung angeordneten Ventile mit der Steuereinrichtung gekoppelt. Dadurch können die Lösemittelleitung und die Abflussleitung geöffnet und geschlossen werden oder es kann durch die Steuereinrichtung ein bestimmter Druck des Lösemittelstroms in der Lösemittelleitung und/oder ein bestimmter Volumenstrom der Wirksubstanzlösung beim Zuführen zur Getränkezubereitungsmaschine eingestellt werden. Weiterhin ist die Steuereinrichtung bevorzugt auch mit der Druckgasquelle und/oder einem Ventil in der Druckgasleitung gekoppelt, um die Zufuhr des Druckgases zu steuern. Wenn der Wirksubstanzzugang mit einem Spender oder einer Dosiervorrichtung gekoppelt ist, wird zweckmäßig auch der Spender oder die Dosiervorrichtung von der Steuereinrichtung angesteuert.

Eine besonders schnelle und vollständige Auflösung von fester Wirksubstanz in der Wirksubstanzlösung lässt sich erzielen, wenn der Lösekammer warmes oder heißes Lösemittel zugeführt wird, in dem sich die feste Wirksubstanz auflöst. Daher ist die Lösemittelleitung bevorzugt mit einem Lösemittelvorrat gekoppelt, der erwärmtes Lösemittel, das insbesondere eine Temperatur zwischen 40°C und 100°C aufweist, bereitstellt. Der Lösemittelvorrat ist dabei zweckmäßig mit einem Boiler oder einem Durchlauferhitzer der Getränkezubereitungsmaschine gekoppelt, welcher bspw. heißes Wasser oder warme Milch für die Getränkezubereitung erzeugt. In einer bevorzugten Ausführungsform ist dabei die Vorkammer über die Lösemittelleitung mit dem Boiler oder dem Durchlauferhitzer, der erwärmtes Lösemittel mit einer Temperatur von mindestens 40°C bereitstellt, verbunden.

In dem erfindungsgemäßen Verfahren zur Zufuhr einer Wirksubstanz-Lösung zu einer Getränkezubereitungsmaschine, bei der es sich insbesondere um eine mit einer Vorrichtung nach der Erfindung ausgestattete Getränkezubereitungsmaschine handelt, wird zunächst in einer Lösekammer eine Lösung aus einer Wirksubstanz und einem Lösemittel, hergestellt, indem eine bestimmte Menge einer Wirksubstanz in die Lösekammer dosiert und anschließend über eine an einen Lösemittelvorrat anschließbare Lösemittelleitung ein Lösemittel in die Lösekammer geleitet wird, wodurch die Wirksubstanz in dem Lösemittel zu einer Wirksubstanzlösung aufgelöst wird, und danach wird die Wirksubstanzlösung der Getränkezubereitungsmaschine über eine an die Lösekammer angeschlossene Abflussleitung zugeführt. Dabei wird erfindungsgemäß nach der Dosierung der Wirksubstanz in die Lösekammer ein erster Kolben in die Lösekammer eingeführt und durch einen vom eingeleiteten Lösemittel erzeugten Druck in die Lösekammer gedrückt.

Dabei ist bevorzugt vorgesehen, dass das in die Lösekammer geleitete Lösemittel eine Temperatur von mindestens 40°C, bevorzugt von mehr als 60°C und insbesondere zwischen 60°C und 100°C aufweist. Dadurch wird die Effizienz des Lösevorgangs in der Lösekammer verbessert. Weiterhin weist das in die Lösekammer geleitete Lösemittel bevorzugt einen Druck von mindestens 3 bar, bevorzugt zwischen 3 bar und 10 bar und insbesondere zwischen 4 bar und 6 bar auf. Durch diesen Druck des eingeleiteten Lösemittels wird der erste Kolben in die Lösekammer gedrückt und darin in einer Betriebsposition gehalten, solange Lösemittel mit dem vorgegebenen Druck zugeführt wird.

Zur Durchführung des Verfahrens ist die Lösekammer bevorzugt fluidisch mit einer Vorkammer gekoppelt, wobei die Lösemittelleitung, welche das Lösemittel führt, mit der Vorkammer verbunden ist, um das Lösemittel in die Vorkammer und in die Lösekammer zu leiten. Der erste Kolben ist dabei über eine Verbindungsleitung mit einem zweiten Kolben verbunden, wobei der zweite Kolben beweglich in der Vorkammer angeordnet ist. Dabei wird das Lösemittel nach einer Dosierung einer bestimmten Menge der Wirksubstanz in die Lösekammer eingeleitet, wobei während der Lösemittelzufuhr der erste Kolben in die Lösekammer eingeführt und in seiner Betriebsposition gehalten wird. Das einströmende Lösemittel drückt dabei zunächst den zweiten Kolben in die Vorkammer und der vom eingeleiteten Lösemittel erzeugte Druck wird vom zweiten Kolben auf den ersten Kolben übertragen, wodurch der ersten Kolben in der Lösekammer in seine Betriebsposition gebracht wird. Dabei strömt nach dem Einführen des ersten Kolbens in seine Betriebsposition das Lösemittel durch die Verbindungsleitung, welche den ersten und den zweiten Kolben verbindet, in die erste Kammer. Zweckmäßig erstreckt sich hierbei die Verbindungsleitung, die insbesondere rohrförmig ausgebildet ist, bevorzugt durch den ersten und den zweiten Kolben, um eine fluidische Verbindung zwischen der Lösekammer und der Vorkammer herzustellen.

Bei einer Zufuhr von Lösemittel durch die Lösemittelleitung wird durch den vom eingeleiteten Lösemittelstrom erzeugten Druck also der erste Kolben in die Lösekammer gedrückt, wobei der vom eingeleiteten Lösemittel erzeugte Druck zunächst auf den zweiten Kolben, insbesondere dessen oberer Stirnfläche, einwirkt und von diesem auf den ersten Kolben übertragen wird. Dabei ist der Querschnitt des zweiten Kolbens, auf den der Druck des Lösemittelstroms einwirkt, bevorzugt größer als der Querschnitt des ersten Kolbens, auf den ein Gegendruck einwirkt, der von dem Lösemittel erzeugt wird, das über die Verbindungsleitung in die Lösekammer strömt.

Nach der Erzeugung der Wirksubstanzlösung durch Auflösen oder Vermischen der Wirksubstanz in dem Lösemittel, das der Lösekammer zugeführt worden ist, wird zunächst die Zufuhr von Lösemittel gestoppt und danach die Wirksubstanzlösung durch Einleiten eines Druckgases, insbesondere von Druckluft, in die Lösekammer von der Lösekammer in die Abflussleitung gedrückt und dadurch der Getränkezubereitungsmaschine zugeführt. In einem kontinuierlichen Betrieb kann auch bereits während der Lösemittelzufuhr die in der Lösekammer erzeugte Wirksubstanzlösung in die Abflussleitung geleitet werden.

Sobald die Wirksubstanzlösung vollständig in die Abflussleitung überführt worden ist, wird das Einleiten des Druckgases in die Lösekammer gestoppt, wodurch sich der zweite Kolben selbsttätig aufgrund der Rückstellkraft eines Federelements aus der Lösekammer in seine Grundposition herausbewegt.

Wenn sich der erste Kolben in seiner Grundposition außerhalb der Lösekammer befindet, ist der Wirksubstanzzugang, durch den das Wirksubstanz in die Lösekammer eingebracht wird, freigegeben, und der Wirksubstanzzugang ist gesperrt, wenn sich der erste Kolben in einer Betriebsposition innerhalb der Lösekammer befindet. Dies verhindert, dass während der Erzeugung der Wirksubstanzlösung noch Wirksubstanz in die Lösekammer gelangen kann.

Das Verfahren wird bevorzugt automatisch durch eine Steuereinrichtung gesteuert, welche insbesondere ein Ventil in der Lösemittelleitung und/oder einen daran angeschlossenen Lösemittelvorrat, einen Spender oder eine Dosiervorrichtung zur Ausgabe der bestimmten Menge der Wirksubstanz, eine Druckgasquelle zur Einleitung eines Druckgases in die Lösekammer und ein Ventil in der Abflussleitung ansteuert, um die oben beschriebenen Schritte zur Herstellung einer Wirksubstanzlösung und Zufuhr der Wirksubstanzlösung zu einer Getränkezubereitungsmaschine auszuführen.

Dabei ist die Steuereinrichtung bevorzugt so eingerichtet oder programmierbar, dass nach vorgegebenen Ereignissen, die insbesondere von einem Betrieb der Getränkezubereitungseinrichtung abhängig sind, und/oder nach einer Auswahl eines Bedieners über eine Kommunikationsschnittstelle der Getränkezubereitungseinrichtung oder zu vorgegebenen Zeiten automatisiert ein Vorgang der Getränkezubereitungseinrichtung ausgeführt wird, wobei in dem Vorgang die erzeugte Wirksubstanzlösung in der Getränkezubereitungseinrichtung bspw. zur Herstellung eines Getränks oder zur Durchführung eines Reinigungs- oder Entkalkungsvorgangs eingesetzt werden kann.

Gegenstand der Erfindung ist weiterhin eine Getränkezubereitungsmaschine, insbesondere eine Kaffeemaschine, in der bevorzugt über ein integriertes Milchmodul auch heiße Milch sowie warmer oder kalter Milchschaum zubereitet werden kann, wobei die Getränkezubereitungsmaschine mit einer erfindungsgemäßen Vorrichtung ausgestattet ist. Bevorzugt ist dabei eine erfindungsgemäße Vorrichtung in die Getränkezubereitungsmaschine integriert oder als austauschbares Modul einführbar. Dabei ist die Vorrichtung zweckmäßig mit einer Brüheinrichtung zum Brühen eines Heißgetränks und/oder mit einem Milchmodul zum Erwärmen und/oder Aufschäumen von Milch sowie mit einem Leitungssystem gekoppelt, um der Brüheinrichtung und/oder dem Milchmodul sowie den Leitungen des Leitungssystems, in denen die Getränke und Getränkezutaten transportiert werden, eine erzeugte Wirksubstanzlösung zuführen zu können..

Diese und weitere Vorteile, Anwendungen sowie Merkmale der Erfindung ergeben sich aus dem nachfolgend unter Bezugnahme auf die Zeichnungen beschriebenen Ausführungsbeispiel. Dabei zeigen:
- **Fig.** 1:: eine schematische Darstellung einer ersten Ausführungsform einer erfindungsgemäßen Vorrichtung in einer Grundposition;

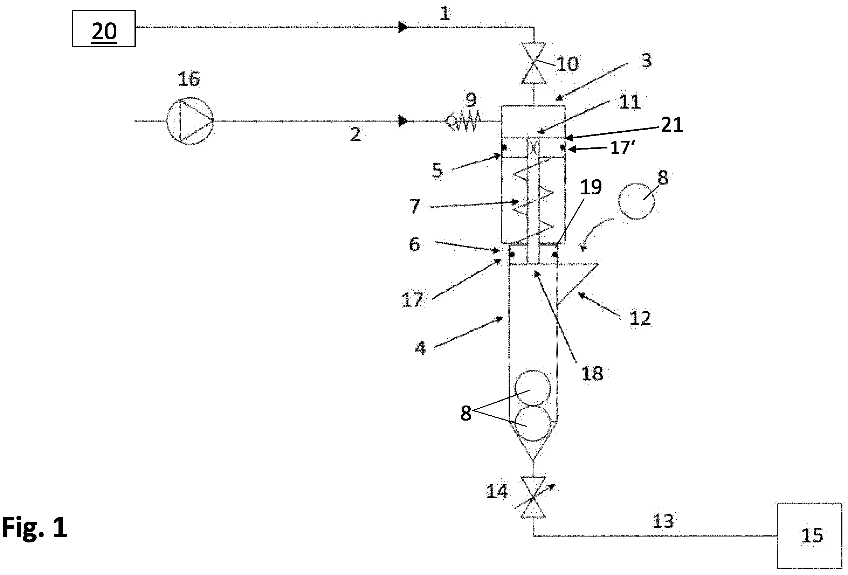

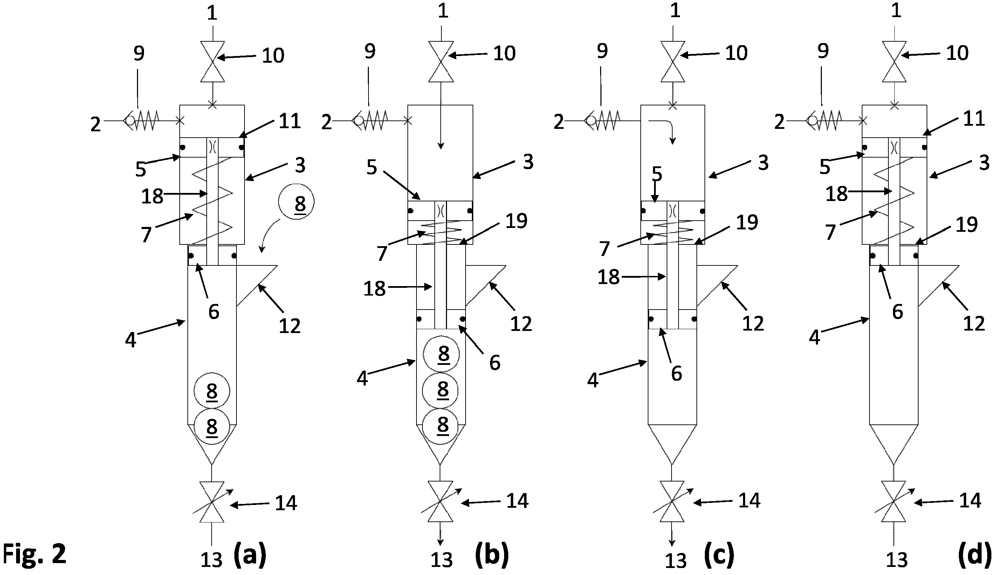

- **Fig. 2:**: schematische Darstellungen der Vorrichtung von Figur 1 in verschiedenen Positionen während der Einleitung und Durchführung eines Zyklus zur Herstellung und Überführung einer Wirksubstanzlösung an eine Getränkezubereitungsmaschine, wobei Figur 2(a) die Vorrichtung in der Grundposition zeigt, in der eine Wirksubstanz zugeführt wird, Figur 2(b) die Vorrichtung in einer Betriebsposition zeigt, in der ein Lösemittel zugeführt und die Wirksubstanz darin zu einer Wirksubstanzlösung aufgelöst wird, Figur 2(c) die Vorrichtung in der Betriebsposition zeigt, in der die Wirksubstanzlösung abgeführt wird und Figur 2(d) die Vorrichtung wieder in der Grundposition zeigt, in der diese für einen nachfolgenden Zyklus bereit zur Aufnahme der Wirksubstanz ist;
- **Fig. 3:**: eine schematische Darstellung einer zweiten Ausführungsform einer erfindungsgemäßen Vorrichtung in einer Grundposition.

Die in Figur 1 gezeigte Vorrichtung umfasst eine Lösekammer 4 mit einem darin beweglich angeordneten ersten Kolben 6 sowie eine Vorkammer 3 mit einem beweglich darin angeordneten zweiten Kolben 5. Die Lösekammer 4 und die Vorkammer 3 sind dabei hohlzylindrisch ausgebildet und weisen jeweils eine zylindrische Wandung auf. Die Lösekammer 4 erstreckt sich dabei in vertikaler Richtung von einem offenen oberen Ende zu einem unteren Ende, welches trichterförmig ausgebildet ist und in eine mit der Lösekammer 4 verbundene Abfuhrleitung 13 mündet. Der erste Kolben 6 kann durch das oben offene Ende in die Lösekammer 4 eingeführt werden. Die Vorkammer 3 ist oberhalb der Lösekammer 4 angeordnet und erstreckt sich ebenfalls zwischen einem oberen Ende und einem unteren Ende, wobei das untere Ende einen Boden mit einer zentralen Öffnung aufweist. Am oberen Ende der Vorkammer 3 ist ein Einlaufstutzen angeordnet, an dem eine Lösemittelleitung 1 angeschlossen ist. Die Lösemittelleitung 1 ist Bestandteil eines Flüssigkeitsleitungssystems der Vorrichtung, welches die Lösemittelleitung 1 und die Abflussleitung 13 umfasst. Die Lösemittelleitung 1 ist an einem Lösemittelvorrat 20 angeschlossen, der ein Lösemittel, bspw. Wasser, bereitstellt. Das Lösemittel kann dabei erwärmt sein und weist bevorzugt eine Temperatur von mindestens 40 °C und insbesondere im Bereich zwischen 60 °C und 100 °C auf. Eine Erwärmung des Lösemittels ist bspw. vorteilhaft, wenn aus dem Lösemittel eine Reinigungsmittellösung hergestellt werden soll, da deren Wirkung bei höherer Temperatur verbessert ist. Außerdem verbessert sich bei diesen Temperaturen die Effizienz des Lösevorgangs. In der Lösemittelleitung 1 ist ein Sperrventil 10 angeordnet, welches zum Öffnen und Schließen der Lösemittelleitung 1 dient. Anstelle eines Sperrventils oder ergänzend dazu kann auch ein Regelventil und/oder ein Druckminderer in der Lösemittelleitung 1 angeordnet sein.

Im Bereich des oberen Endes der Vorkammer 3 ist ein Anschlag 21 angeordnet, der beispielsweise durch einen von der Wandung der Vorkammer 3 in das Kammerinnere ragenden Ringflansch gebildet sein kann. Der in der Vorkammer 3 beweglich angeordnete zweite Kolben 5 kann sich in der Vorkammer 3 zwischen einer Grundposition a und einer Betriebsposition b bewegen, wobei eine Oberseite des zweiten Kolbens 5 in der in Figur 1 gezeigten Grundposition a am Anschlag 21 anliegt und eine Unterseite des zweiten Kolbens 5 in der in Figur 2b gezeigten Betriebsposition b auf dem Boden der Vorkammer 3 aufliegt oder sich zumindest nahe des Bodens befindet.

Wie aus Figur 1 ersichtlich, weist die Vorkammer 3 einen größeren Querschnitt und insbesondere einen größeren Durchmesser als die Lösekammer 4 auf. Entsprechend weist auch der zweite Kolben 5 einen größeren Querschnitt und insbesondere einen größeren Durchmesser als der erste Kolben 6 auf.

Der erste Kolben 6 und der zweite Kolben 5 sind jeweils zylinder- oder scheibenförmig ausgebildet und über eine Verbindungsleitung 18 miteinander verbunden, wobei die Verbindungsleitung 18 sich sowohl durch den ersten Kolben 6 als auch durch den zweiten Kolben 5 erstreckt und durch die zentrale Öffnung im Boden der Vorkammer 3 verläuft. Die Verbindungsleitung 18 stellt dadurch eine Fluidverbindung zwischen der Lösekammer 4 und der Vorkammer 3 her. In der Verbindungsleitung 18 ist bevorzugt eine Düse 11 angeordnet.

In der Vorkammer 3 ist ein Federelement 7 angeordnet, beispielsweise eine Spiralfeder, welche sich zwischen der Unterseite des zweiten Kolbens 5 und dem Boden der Vorkammer 3 erstreckt.

Das Federelement 7 ist dabei insbesondere um die Verbindungsleitung 18 herum angeordnet, wie aus Figur 1 ersichtlich. Der Boden der Vorkammer 3 bildet dabei eine Stütze 19, an der sich das Federelement 7 abstützt. Durch das Federelement 7 wird der zweite Kolben 5 in der Vorkammer 3 in seiner (oberen) Grundposition a vorgespannt. Entsprechend befindet sich auch der über die Verbindungsleitung 18 mit dem zweiten Kolben 5 verbundene erste Kolben 6 in einer (oberen) Grundposition a, in welcher der erste Kolben 6 aus der Lösekammer 4 herausgezogen ist.

Der erste Kolben 6 und der zweite Kolben 5 weisen an ihrem Außenumfang jeweils mindestens einen umlaufenden Dichtring 17, 17' auf, wobei der Dichtring 17 des ersten Kolbens 6 an der Innenseite der Wandung der Lösekammer 4 und der Dichtring 17' des zweiten Kolbens 5 an der der Innenseite der Wandung der Vorkammer 3 anliegt, wenn der zweite Kolben 5 in der Vorkammer 3 von seiner (oberen) Grundposition a in seine (untere) Betriebsposition b bewegt wird und sich der erste Kolben 6 dabei gleichzeitig in die Lösekammer 4 hineinbewegt.

Der erste Kolben 6 und der zweite Kolben 5 sowie die Verbindungsleitung 18 und das Federelement 7 bilden eine Kolbeneinheit, die durch das Federelement 7 in einer Grundposition a vorgespannt ist und durch Einleiten einer externen Kraft von der Grundposition a in eine Betriebsposition b bewegt werden kann.

Im Bereich des oberen Endes der Lösekammer 4 ist ein Wirksubstanzzugang 12 angeordnet. Der Wirksubstanzzugang 12 umfasst dabei eine hier nicht zeichnerisch dargestellte seitliche Öffnung in der Wandung der Lösekammer 4, durch welche eine Wirksubstanz 8, beispielsweise in Tabletten- oder Kugelform, in die Lösekammer 4 eingeführt werden kann. Um die Wirksubstanz 8 in einer vorgegebenen Menge in die Lösekammer 4 zu dosieren, ist der Wirksubstanzzugang 12 mit einem Spender oder einer Dosiervorrichtung verbunden, welche die Wirksubstanz 8 durch den Wirksubstanzzugang 12 in die Lösekammer 4 dosiert. Bevorzugt liegt die Wirksubstanz 8 in Form von Tabletten oder Kugeln vor, welche einzelnen mittels des Spenders oder der Dosiervorrichtung in die Lösekammer 4 dosiert werden. Dabei können auch mehrere Tabletten oder Kugeln der Wirksubstanz 8 über den Wirksubstanzzugang 12 in die Lösekammer 4 eingebracht werden, wie in Figur 1 durch die beiden Wirksubstanzkugeln 8 angedeutet, die sich am unteren, trichterförmig ausgebildeten Ende der Lösekammer 4 befinden. Die Wirksubstanz kann jedoch auch als Pulver, Granulat oder als Flüssigkeit vorliegen.

Im Bereich des oberen Endes mündet eine Druckgasleitung 2 in die Vorkammer 3. Die Druckgasleitung 2 enthält dabei ein Rückschlagventil 9 und ist stromaufwärts des Rückschlagventils 9 mit einer Druckgasquelle 16 verbunden, welche ein komprimiertes Gas, beispielsweise Druckluft, bereitstellt. Anstelle von Druckluft können auch andere lebensmittelverträgliche Gase durch die Druckgasquelle 16 unter Druck bereitgestellt werden. Hierfür kommen anstelle von Druckluft beispielsweise auch komprimiertes Stickstoffgas oder komprimiertes Kohlendioxid in Betracht. Die Druckgasquelle 16 kann beispielsweise durch einen Kompressor gebildet sein, der Umgebungsluft ansaugt und auf einen vorgegebenen Druck komprimiert.

Die am unteren Ende der Vorkammer 4 angeschlossene Abflussleitung 13 ist mit einer Getränkezubereitungsmaschine 15 gekoppelt und dabei insbesondere mit einem Flüssigkeitsleitungssystem der Getränkezubereitungsmaschine 15 verbunden, um eine in der Vorrichtung erzeugte Wirksubstanzlösung in das Flüssigkeitsleitungssystem der Getränkezubereitungsmaschine 15 zu leiten. Zum Öffnen und Schließen der Abflussleitung 13 ist zumindest ein Ventil in der Abflussleitung 13 angeordnet. Bevorzugt enthält die Abflussleitung 13 ein Regelventil 14, welches einen einstellbaren Strömungsquerschnitt aufweist.

Die in Figur 1 gezeigte Vorrichtung ist zweckmäßig in einem Gehäuse der Getränkezubereitungsmaschine 15 angeordnet. Bevorzugt ist die Vorrichtung dabei als Modul austauschbar in dem Gehäuse der Getränkezubereitungsmaschine 15 eingesetzt. Der Lösemittelvorrat 20 und die Druckgasquelle 16 sind dabei bevorzugt Bestandteile der Getränkezubereitungsmaschine 15, welche einerseits bei der Herstellung von Getränken in der Getränkezubereitungsmaschine, bspw. zur Bereitstellung von heißem Wasser oder von erwärmter Milch und zur Bereitstellung von Druckgas, insbesondere Druckluft eingesetzt werden können und andererseits die Vorrichtung über die Lösemittelleitung 1 mit Lösemittel und über die Druckgasleitung 2 mit einem Druckgas versorgen können. Der Lösemittelvorrat 20 kann dabei insbesondere durch einen Boiler oder einen Durchlauferhitzer der Getränkezubereitungsmaschine 15 gebildet sein, der erhitztes Wasser bereitstellt.

Zur Steuerung der Vorrichtung ist eine Steuereinrichtung vorgesehen, welche insbesondere die Ventile 10 und 14 in der Lösemittelleitung 1 und in der Abflussleitung 13 sowie die Zuführung eines Druckgases von der Druckgasquelle 16 durch die Druckgasleitung 2 und die Einführung der Wirksubstanz 8 durch den Wirksubstanzzugang 12 in die Lösekammer 4 steuert. Die Steuereinrichtung kann dabei zweckmäßig Bestandteil der Steuereinrichtung der Getränkezubereitungsmaschine 15 sein, welche so eingerichtet ist, dass nach oder zu bestimmten Zeiten oder Ereignissen, die insbesondere von der Herstellung von Getränken in der Getränkezubereitungsmaschine 15 abhängen und bspw. von einem Bediener über eine Kommunikationsschnittstelle ausgewählt werden können, ein Vorgang in der Getränkezubereitungsmaschine 15 eingeleitet wird, für den die Getränkezubereitungsmaschine 15 eine in der Vorrichtung erzeugte Wirksubstanzlösung benötigt.

In Figur 2 sind einzelne Phasen eines Zyklus zur Herstellung einer Lösung aus der Wirksubstanz und dem Lösemittel, der mit der Vorrichtung von Figur 1 ausgeführt werden kann, durch verschiedene Positionen der Vorrichtung dargestellt, wobei die in Figur 2 dargestellten Phasen in dem Zyklus nacheinander ausgeführt werden, um in einem kontinuierlichen Betrieb oder in einem Batchbetrieb eine Wirksubstanzlösung in der Vorrichtung zu erzeugen und zu einer Getränkezubereitungsmaschine zu leiten.

In Figur 2a ist die Vorrichtung in ihrer Grundposition a gezeigt, welche der Darstellung von Figur 1 entspricht. Zur Einleitung eines Zyklus zur Herstellung einer Lösung aus einer Wirksubstanz und einem Lösemittel wird bei abgestellter Druckgasquelle 16 oder geschlossener Druckgasleitung 2 und geschlossenen Ventilen 10 und 14 zunächst durch den Wirksubstanzzugang 12 eine vorgegebene Menge an Wirksubstanz 8, bspw. eine bestimmte Anzahl an Wirksubstanztabletten oder -kugeln, in die Lösekammer 4 gegeben. Danach wird, wie in Figur 2b gezeigt, das Ventil 10 in der Lösemittelleitung 1 geöffnet. Weiterhin wird das Regelventil 14 in der Abflussleitung 13 zumindest teilweise geöffnet und insbesondere auf einen vorgegebenen Strömungsquerschnitt eingestellt. Dadurch strömt bevorzugt warmes Lösemittel, bspw. Wasser mit einer Temperatur von 40 °C bis 80°C, und mit einem vorgegebenen Druck des Lösemittelstroms, der bevorzugt mehr als 3 bar und insbesondere zwischen 3 bar und 10 bar beträgt, von der Lösemittelleitung 1 in den oberen Bereich der Vorkammer 3. Der Druck des Lösemittelstroms kann dabei ggf. durch ein Druckregelventil oder einen Druckminderer in der Lösemittelleitung 1 auf einen bestimmten Wert eingestellt werden. Durch den auf die obere Stirnfläche des zweiten Kolbens 5 einwirkenden Drucks des Lösemittelstroms wird der zweite Kolben 5 in der Vorkammer 3 aus seiner in Figur 2a gezeigten Grundposition a in die in Figur 2b gezeigte Betriebsposition b bewegt, in welcher sich der zweite Kolben 5 in der Vorkammer 3 in der Nähe des Bodens befindet. Da der zweite Kolben 5 über die Verbindungsleitung 18 mit dem ersten Kolben 6 gekoppelt ist, bewegt sich dabei auch der erste Kolben 6 von seiner in Figur 2a gezeigten Grundposition a, in welcher der erste Kolben 6 aus der Lösekammer 4 herausgezogen ist, in die in Figur 2b gezeigte Betriebsposition b, in welcher sich der erste Kolben 6 innerhalb der Lösekammer 4 auf einer bestimmten Höhe befindet. Der erste Kolben 6 ist dabei oberhalb der sich in der Lösekammer 4 befindlichen Kugeln der Wirksubstanz 8 angeordnet, wie in Figur 2b gezeigt. Durch die Bewegung des ersten Kolbens 6 in seine in Figur 2b gezeigte Betriebsposition b wird der Wirksubstanzzugang 12 und insbesondere die Öffnung in der Wandung der Lösekammer 4 geschlossen, so dass keine Wirksubstanz mehr in einen Bereich unterhalb des ersten Kolbens 6 in die Lösekammer 4 gelangen kann.

Das über die Lösemittelleitung 1 in die Vorkammer 3 strömende Lösemittel fließt dabei durch die Düse 11 in der Verbindungsleitung 18 in die Lösekammer 4, welche über die Verbindungsleitung 18 fluidleitend mit der Vorkammer 3 verbunden ist. Aufgrund des größeren Querschnitts des ersten Kolbens 6 gegenüber dem Querschnitt des zweiten Kolbens 5 ist die Gegenkraft, die durch das in die Lösekammer 4 eingeleitete Lösemittel auf den ersten Kolben 6 ausgeübt wird, kleiner als die vom Druck des Lösemittelstroms auf den zweiten Kolben 5 ausgeübte Kraft, wodurch der erste Kolben 6 und der zweite Kolben 5 jeweils in ihrer Betriebsposition b gehalten werden, solange das unter Druck stehende Lösemittel über die Lösemittelleitung 1 eingeleitet wird. Die Düse 11 stellt dabei stromaufwärts der Düse 11 einen ausreichend hohen Druck sicher, um die Kolbeneinheit in ihrer Betriebsposition b zu halten.

Durch das Einströmen von Lösemittel in die Lösekammer 4 im Bereich unterhalb des ersten Kolbens 6 werden die sich in der Lösekammer 4 befindlichen Kugeln der Wirksubstanz 8 in dem Lösemittel zu einer Wirksubstanzlösung aufgelöst. Die Konzentration der Wirksubstanz 8 in der Wirksubstanzlösung wird dabei durch die Menge der Wirksubstanz in der Lösekammer 4 und dem Volumenstrom des durchströmenden Lösemittels bestimmt, welcher von dem eingestellten Strömungsquerschnitt in der Abflussleitung 13 abhängt.

Durch den verschlossenen Wirksubstanzzugang 12 ist dabei sichergestellt, dass während des Auflösens der Wirksubstanz 8 zu der Wirksubstanzlösung keine weitere Wirksubstanz in die Lösekammer 4 zugegeben werden kann.

Somit stellt sich bei einem vorgegebenen Strömungsquerschnitt in der Abflussleitung 13 und einer bestimmten Menge der Wirksubstanz 8 in der Lösekammer 4 eine bestimmte Wirksubstanzkonzentration in der Wirksubstanzlösung ein, welche kontinuierlich in die Abflussleitung 13 strömt und dadurch zu der Getränkezubereitungsmaschine 15, insbesondere in das Flüssigkeitsleitungssystem der Getränkezubereitungsmaschine 15, gefördert wird.

Durch die Temperatur und den Druck des in die Lösekammer 4 eingeleiteten Lösemittelstroms wird eine vollständige Auflösung und eine homogene Vermischung der Wirksubstanz 8 in der Wirksubstanzlösung gewährleistet. Nach Überführung einer für den in der Getränkezubereitungsmaschine durchzuführenden Vorgang ausreichenden Menge der Wirksubstanzlösung wird das Ventil 10 der Lösemittelleitung 1 geschlossen und dadurch die Lösemittelzufuhr gestoppt. Danach wird - wie in Figur 2c gezeigt - ein Druckgas, insbesondere Druckluft, über die Druckgasleitung 2 in den oberen Bereich der Vorkammer 3 eingeleitet, wobei der Druck des Druckgases bevorzugt mehr als 1 bar und insbesondere zwischen 1,5 bar und 3 bar beträgt. Durch den Druck des eingeleiteten Druckgases, welches von der Vorkammer 3 über die Verbindungsleitung 18 in die Lösekammer 4 strömt, wird eine sich noch in der Lösekammer 4 befindliche Restmenge der Wirksubstanzlösung in die Abflussleitung 13 gepresst.

Die Vorrichtung kann anstelle des vorbeschriebenen kontinuierlichen Betriebs auch in einem Batchbetrieb betrieben werden, in dem zunächst eine bestimmte Dosis einer Wirksubstanzlösung mit einer bestimmten Konzentration der Wirksubstanz in der Lösekammer erzeugt und danach durch die Abflussleitung 13 der Getränkezubereitungsmaschine 15 zugeführt wird. In diesem Batchbetrieb wird das Volumen einer Dosis der erzeugten Wirksubstanzlösung durch die Stellung des ersten Kolbens 6 in der ersten Klammer 4 in seiner Betriebsposition b bestimmt, denn diese Position bestimmt das Volumen der Lösekammer 4 unterhalb des ersten Kolbens 6, in dem sich die Wirksubstanz 8 befindet. Die Stellung des ersten Kolbens 6 in der Lösekammer 4 in seiner Betriebsposition kann dabei bei geschlossener Abflussleitung 13 durch den Druck des über die Lösemittelleitung 1 eingeleiteten Lösemittelstroms eingestellt werden. Somit kann das Volumen der Dosis der Wirksubstanzlösung in der Lösekammer 4 durch den Druck des Lösemittelstroms variiert werden. Beim Auflösen oder Vermischen der Wirksubstanz 8 in dem Lösemittel ergibt sich daher eine bestimmte Konzentration der Wirksubstanz 8 in der gebildeten Wirksubstanzlösung, welche durch die vorgegebene Menge der Wirksubstanz 8 in der Lösekammer 4 und das Volumen der Lösekammer 4 unterhalb des ersten Kolbens 6 bestimmt ist.

Nach dem Auflösen und Vermischen der Wirksubstanz 8 in der sich in der Lösekammer 4 befindlichen Dosis des Lösemittels wird der Getränkezubereitungsmaschine 15 über die Abflussleitung 13 die erzeugte Dosis der Wirksubstanzlösung zugeführt, indem bei geschlossenem Ventil 10 in der Lösemittelleitung 1 die Abflussleitung 13, insbesondere das Ventil 14, geöffnet und ein Druckgas mittels der Druckgasleitung 2 in die Lösekammer 4 eingeleitet wird. Die Dosis der Wirksubstanzlösung weist dabei eine bestimmte Konzentration der Wirksubstanz in der Lösung auf, wobei die Konzentration durch die der Lösekammer 4 zugeführten Menge der Wirksubstanz 8 und den Druck des Lösemittelstroms bei der Herstellung der Wirksubstanzlösung eingestellt werden kann. Ein in der Abflussleitung 13 angeordnetes Regelventil 14 ermöglicht beim Ablassen der Wirksubstanzlösung vorteilhaft die Einstellung eines bestimmten Volumenstroms der Wirksubstanzlösung aus der Lösekammer 4 in die Abflussleitung 13.

Nach Überführung der Wirksubstanzlösung aus der Lösekammer 4 in das Flüssigkeitsleitungssystem der Getränkezubereitungsmaschine 15 im kontinuierlichen Betrieb oder im Batchbetrieb der Vorrichtung wird der Zyklus beendet und die Vorrichtung wird wieder in ihre Grundposition a gebracht, indem bei geschlossenem Ventil 10 die Zufuhr des Druckgases über die Druckgasleitung 2 gestoppt wird (durch Abschalten der Druckgasquelle 16 oder durch Verschließen der Druckgasleitung 2 mit einem Ventil). Dadurch bewegt sich die Kolbeneinheit, die den ersten Kolben 6, den zweiten Kolben 5 sowie die Verbindungsleitung 18 umfasst, zurück in ihre Grundposition a, welche in Figur 2d gezeigt ist. Dabei wird die Kolbeneinheit aufgrund der Rückstellkraft des Federelements 7 selbsttätig in die Grundposition a gebracht, in welcher der zweite Kolben 5 am Anschlag 21 der Vorkammer 3 anliegt und der erste Kolben 6 aus der Lösekammer 4 zumindest soweit herausgezogen ist, dass sich der erste Kolben 6 oberhalb des Wirksubstanzzugangs 12 und insbesondere oberhalb der Öffnung in der Wandung der Lösekammer 4 befindet, wie in Figur 2d dargestellt. In dieser Grundposition a der Vorrichtung steht die Lösekammer 4 wieder zur Aufnahme einer vorgegebenen Menge der Wirksubstanz 8 und insbesondere zur Aufnahme einer bestimmten Anzahl von Kugeln oder Tabletten der Wirksubstanz 8 zur Verfügung und die Vorrichtung kann für einen nachfolgenden Zyklus eingesetzt werden.

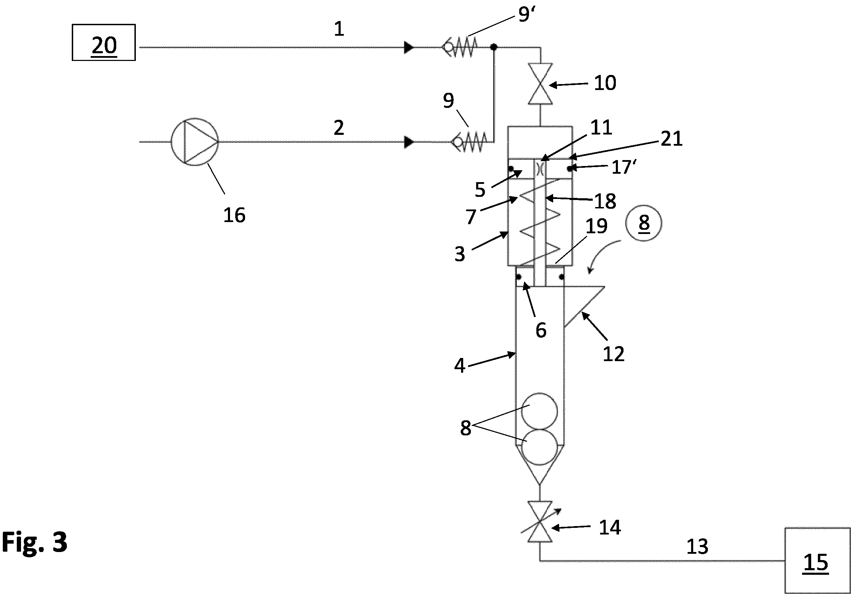

In Fig. 3 ist eine zweite Ausführungsform einer erfindungsgemäßen Vorrichtung in der Grundposition gezeigt. Diese Ausführungsform stimmt mit der Vorrichtung von Fig. 1 überein, bis auf die Anordnung der Druckgasleitung 2, welche in der Ausführungsform der Fig. 3 nicht in die Vorkammer 3 sondern in die Lösemittelleitung 1 mündet. In der Lösemittelleitung 1 ist dabei ein weiteres Rückschlagventil 9' angeordnet, um zu verhindern, dass Druckgas aus der Druckgasleitung 2 in Richtung des Lösemittelvorrats 20 fließen kann. In dieser Ausführungsform wird das Druckgas der Druckgasquelle 16 über die Druckgasleitung 2 in die Lösemittelleitung 1 geleitet, um bei geöffnetem Ventil 10 in der Lösemittelleitung 1 die in der Lösekammer 4 befindliche Wirksubstanzlösung in die Abflussleitung 13 zu drücken, nachdem die Wirksubstanz vollständig in der Wirksubstanzlösung aufgelöst oder vermischt worden ist. Die Ausführungsform von Fig. 3 zeichnet sich gegenüber der Ausführungsform der Fig. 1 durch einen einfacheren Aufbau der Vorkammer 3 aus.

Die Vorrichtung gemäß der Erfindung ermöglicht eine schnelle und vollständige Auflösung und eine homogene Vermischung der Wirksubstanz in dem Lösemittel, insbesondere aufgrund des Drucks und der Temperatur des über die Lösemittelleitung 1 zugeführten Lösemittels. Weiterhin wird eine genaue Dosierung einer vorgebbaren Menge der Wirksubstanz 8 sowie die Einhaltung einer bestimmten Konzentration der Wirksubstanz in der Wirksubstanzlösung gewährleistet, wobei die genaue Wirksubstanzkonzentration insbesondere über den Druck des durch die Lösemittelleitung 1 zugeführten Lösemittelstroms gesteuert werden kann. Die Vorrichtung weist dabei einen einfachen und kompakten Aufbau auf und benötigt keine motorische Ansteuerung zur Überführung der Vorrichtung von ihrer Grundposition a in ihre Betriebsposition b, und zurück. Merkmale und Vorteile der Erfindung, die in Bezug auf die Vorrichtung beschrieben sind, beziehen sich auch auf das Verfahren, und umgekehrt.

## Patentansprüche

1. Vorrichtung zur Herstellung einer Lösung aus einer Wirksubstanz und einem Lösemittel und zur Zuführung der Lösung zu einer Getränkezubereitungsmaschine (15), insbesondere zu einer Kaffeemaschine, umfassend eine Lösekammer (4) zur Aufnahme der Wirksubstanz (8), eine Zufuhreinrichtung (12) zur Zuführung einer bestimmten Menge der Wirksubstanz (8) in die Lösekammer (4) sowie ein mit der Lösekammer (4) gekoppeltes Flüssigkeitsleitungssystem (1, 13) mit einer an einen Lösemittelvorrat (20) anschließbare Lösemittelleitung (1) zur Zufuhr des Lösemittels und einer an die Lösekammer (4) angeschlossene Abflussleitung (13), welche mit der Getränkezubereitungsmaschine (15) verbindbar ist, **gekennzeichnet durch** eine Kolbeneinheit (5, 6, 18), welche einen in die Lösekammer (4) einführbaren ersten Kolben (6), einen beweglich in einer Vorkammer (3) angeordneten zweiten Kolben (5) und eine zwischen dem ersten Kolben (6) und dem zweiten Kolben (5) angeordnete Verbindungsleitung (18) umfasst, wobei die Verbindungsleitung (18) den ersten Kolben (6) und den zweiten Kolben (5) verbindet, so dass eine Bewegung des zweiten Kolbens (5) auf den ersten Kolben (6) übertragen wird.

2. Vorrichtung nach Anspruch 1, **dadurch gekennzeichnet, dass** der erste Kolben (6) zwischen einer Grundposition (a), in der der erste Kolben (6) aus der Lösekammer (4) herausgezogen ist, und einer Betriebsposition (b), in der sich der erste Kolben (6) in der Lösekammer (4) befindet, beweglich ist.

3. Vorrichtung nach Anspruch 1, **dadurch gekennzeichnet, dass** die Vorkammer (3) stromaufwärts der Lösekammer (4) angeordnet ist und über die Verbindungsleitung (18) mit der Lösekammer (4) fluidleitend in Verbindung steht.

4. Vorrichtung nach einem der voranstehenden Ansprüche, **dadurch gekennzeichnet, dass** die Kolbeneinheit (5, 6, 18) ein zwischen dem ersten Kolben (6) und dem zweiten Kolben (5) und insbesondere um die Verbindungsleitung (18) angeordnetes Federelement (7) umfasst, wobei das Federelement (7) in einem unbelasteten Zustand eine Vorspannung auf den ersten Kolben (6) ausübt, die den ersten Kolben (6) in einer Grundposition (a) hält, in der der erste Kolben (6) aus der Lösekammer (4) herausgezogen ist.

5. Vorrichtung nach Anspruch 4, **dadurch gekennzeichnet, dass** der erste Kolben (6) bei einer Zufuhr von Lösemittel durch die Lösemittelleitung (1) gegen eine von dem Federelement (7) erzeugte Vorspannung aus einer Grundposition (a) in eine Betriebsposition (b) bewegbar ist, in der sich der erste Kolben (6) in der Lösekammer (4) befindet.

6. Vorrichtung nach einem der voranstehenden Ansprüche, **dadurch gekennzeichnet, dass** die Vorkammer (3) einen größeren Querschnitt und insbesondere einen größeren Durchmesser als die Lösekammer (4) aufweist und/oder dass der zweite Kolben (5) einen größeren Querschnitt und insbesondere einen größeren Durchmesser als der erste Kolben (6) aufweist.

7. Vorrichtung nach einem der voranstehenden Ansprüche, **dadurch gekennzeichnet, dass** die Zufuhreinrichtung (12) in einem oberen Bereich oder an einem oberen Ende der Lösekammer (4) angeordnet ist und insbesondere eine Öffnung in einer Wandung der Lösekammer (4) aufweist, wobei sich der erste Kolben (6) in einer Betriebsposition (b) soweit in der Lösekammer (4) befindet, dass ein Zugang von der Öffnung in die Lösekammer (4) versperrt ist.

8. Vorrichtung nach einem der voranstehenden Ansprüche, **dadurch gekennzeichnet, dass** die Zufuhreinrichtung (12) eine Dosiervorrichtung umfasst, welche die Wirksubstanz in die Lösekammer (4) dosiert.

9. Vorrichtung nach einem der voranstehenden Ansprüche, **dadurch gekennzeichnet, dass** die Vorkammer (3) mit einer Druckgasleitung (2) verbunden ist, wobei die Druckgasleitung (2) mit einer Druckgasquelle (16) koppelbar ist und bevorzugt in einem oberen Abschnitt oder an einer Oberseite in die Vorkammer (3) oder in die Lösemittelleitung (1) mündet.

10. Vorrichtung nach einem der voranstehenden Ansprüche, **dadurch gekennzeichnet, dass** in der Lösemittelleitung (1) ein Sperrventil (10) und/oder ein Regelventil, insbesondere ein Druckregelventil, und/oder ein Druckminderer angeordnet ist und/oder dass in der Abflussleitung (13) ein Sperrventil und/oder ein Regelventil (14) angeordnet ist.

11. Vorrichtung nach einem der voranstehenden Ansprüche, **dadurch gekennzeichnet, dass** in der Verbindungsleitung (18) eine Düse (11) angeordnet ist.

12. Getränkezubereitungsmaschine (15), insbesondere Kaffeemaschine oder Maschine zur Herstellung eines Pulvergetränks, mit einer Vorrichtung nach einem der voranstehenden Ansprüche, wobei die Vorrichtung insbesondere mit einer Brüheinrichtung zum Brühen eines Heißgetränks und/oder mit einer Einrichtung zum Aufschäumen von Milch gekoppelt ist.

13. Verfahren zur Herstellung und Zufuhr einer Wirksubstanz-Lösung zu einer Getränkezubereitungsmaschine (15), insbesondere einer Getränkezubereitungsmaschine nach Anspruch 12, wobei zunächst in einer Lösekammer (4) eine Lösung aus einer Wirksubstanz und einem Lösemittel, hergestellt wird, indem eine bestimmte Menge einer Wirksubstanz (8) in die Lösekammer (4) dosiert und anschließend über eine an einen Lösemittelvorrat (20) anschließbare Lösemittelleitung (1) ein Lösemittel in die Lösekammer (4) geleitet wird, wodurch die Wirksubstanz (8) in dem Lösemittel zu einer Wirksubstanzlösung aufgelöst wird, und die Wirksubstanzlösung der Getränkezubereitungsmaschine (15) anschließend über eine an die Lösekammer (4) angeschlossene Abflussleitung (13) zugeführt wird, **dadurch gekennzeichnet, dass** nach der Dosierung der Wirksubstanz in die Lösekammer (4) ein erster Kolben (6) in die Lösekammer (4) eingeführt und durch einen vom eingeleiteten Lösemittel erzeugten Druck in die Lösekammer (4) gedrückt wird.

14. Verfahren nach Anspruch 13, **dadurch gekennzeichnet, dass** das Lösemittel mittels einer durch den ersten Kolben (6) verlaufenden Verbindungsleitung (18) in die Lösekammer (4) eingeleitet wird, wobei der erste Kolben (6) über die Verbindungsleitung (18) an einen beweglich in einer Vorkammer (3) angeordneten zweiten Kolben (5) gekoppelt ist.

15. Verfahren nach Anspruch 14, **dadurch gekennzeichnet, dass** die Lösekammer (4) über die Verbindungsleitung (18) fluidleitend mit der Vorkammer (3) gekoppelt und die Lösemittelleitung (1) mit der Vorkammer (3) verbunden ist, wobei der zweite Kolben (5) bei einer Zufuhr von Lösemittel durch die Lösemittelleitung (1) durch einen vom eingeleiteten Lösemittel erzeugten Druck in die Vorkammer (3) gedrückt wird.

## Claims

1. Apparatus for preparing a solution of an active substance and a solvent and for supplying the solution to a beverage preparation machine (15), in particular to a coffee machine, comprising a dissolving chamber (4) for receiving the active substance (8), a supply device (12) for supplying a specific quantity of the active substance (8) into the dissolving chamber (4) and a liquid line system (1, 13) coupled to the dissolving chamber (4) and having a solvent line (1) which can be connected to a solvent supply (20) for supplying the solvent, and a discharge line (13) connected to the dissolving chamber (4), which can be connected to the beverage preparation machine (15), **characterised by** a piston unit (5, 6, 18) which has a first piston (6) which can be introduced into the dissolving chamber (4), a second piston (5) arranged movably in a front chamber (3) and a connecting line (18) arranged between the first piston (6) and the second piston (5), wherein the connecting line (18) connects the first piston (6) and the second piston (5) so that a movement of the second piston (5) is transmitted to the first piston (6).

2. Apparatus according to claim 1, **characterised in that** the first piston (6) is movable between a base position (a), in which the first piston (6) is pulled out of the dissolving chamber (4), and an operating position (b), in which the first piston (6) is located in the dissolving chamber (4).

3. Apparatus according to claim 1, **characterised in that** the front chamber (3) is arranged upstream of the dissolving chamber (4) and is connected to the dissolving chamber (4) in a fluid-conducting manner via the connecting line (18).

4. Apparatus according to any one of the preceding claims, **characterised in that** the piston unit (5, 6, 18) comprises a spring element (7) arranged between the first piston (6) and the second piston (5 ) and in particular around the connecting line (18), the spring element (7) exerting a preload on the first piston (6) in an unloaded state, which preload holds the first piston (6) in a base position (a) in which the first piston (6) is pulled out of the dissolving chamber (4).

5. Apparatus according to claim 4, **characterised in that** the first piston (6) can be moved from a base position (a) into an operating position (b), in which the first piston (6) is located in the dissolving chamber (4), when solvent is supplied through the solvent line (1) against a preload generated by the spring element (7).

6. Apparatus according to any one of the preceding claims, **characterised in that** the front chamber (3) has a larger cross-section and in particular a larger diameter than the dissolving chamber (4) and/or **in that** the second piston (5) has a larger cross-section and in particular a larger diameter than the first piston (6).

7. Apparatus according to any one of the preceding claims, **characterised in that** the supply device (12) is arranged in an upper region or at an upper end of the dissolving chamber (4) and in particular has an opening in a wall of the dissolving chamber (4), the first piston (6) being located in an operating position (b) in the dissolving chamber (4) to such an extent that access from the opening into the dissolving chamber (4) is blocked.

8. Apparatus according to any one of the preceding claims, **characterised in that** the supply device (12) comprises a dosing device which doses the active substance into the dissolving chamber (4).

9. Apparatus according to any one of the preceding claims, **characterised in that** the front chamber (3) is connected to a compressed gas line (2), wherein the compressed gas line (2) can be coupled to a compressed gas source (16) and preferably opens into the front chamber (3) or into the solvent line (1) in an upper section or at an upper side.

10. Apparatus according to any one of the preceding claims, **characterised in that** a shut-off valve (10) and/or a control valve, in particular a pressure control valve, and/or a pressure reducer is arranged in the solvent line (1), and/or that a shut-off valve and/or a control valve (14) is arranged in the discharge line (13).

11. Apparatus according to any one of the preceding claims, **characterised in that** a nozzle (11) is arranged in the connecting line (18).

12. Beverage preparation machine (15), in particular coffee machine or machine for preparing a powdered beverage, with an apparatus according to any one of the preceding claims, wherein the apparatus is coupled in particular with a brewing device for brewing a hot beverage and/or with a device for frothing milk.

13. Method for producing and supplying an active substance solution to a beverage preparation machine (15), in particular a beverage preparation machine according to claim 12, wherein a solution of an active substance and a solvent is first produced in a dissolving chamber (4) by metering a specific quantity of an active substance (8) into the dissolving chamber (4) and then feeding a solvent into the dissolving chamber (4) via a solvent line (1) which can be connected to a solvent supply (20), whereby the active substance (8) is dissolved in the solvent to form an active substance solution, and the active substance solution is then fed to the beverage preparation machine (15) via a discharge line (13) connected to the dissolving chamber (4), **characterised in that**, after the active substance has been metered into the dissolving chamber (4), a first piston (6) is introduced into the dissolving chamber (4) and pressed into the dissolving chamber (4) by a pressure generated by the solvent introduced.

14. Method according to claim 13, **characterised in that** the solvent is introduced into the dissolving chamber (4) by means of a connecting line (18) running through the first piston (6), the first piston (6) being coupled via the connecting line (18) to a second piston (5) arranged movably in a front chamber (3).

15. Method according to claim 14, **characterised in that** the dissolving chamber (4) is coupled to the front chamber (3) in a fluid-conducting manner via the connecting line (18) and the solvent line (1) is connected to the front chamber (3), the second piston (5) being pressed into the front chamber (3) by a pressure generated by the solvent introduced when solvent is supplied through the solvent line (1).

## Revendications

1. Dispositif pour l'obtention d'une solution à partir d'une substance active et d'un solvant et pour l'amenée de la solution à une machine de préparation de boissons (15), en particulier à une machine à café, comprenant une chambre de dissolution (4) pour la réception de la substance active (8), un appareil d'amenée (12) pour l'amenée d'une quantité déterminée de la substance active (8) dans la chambre de dissolution (4) ainsi qu'un système d'acheminement de liquide (1, 13) accouplé à la chambre de dissolution (4) avec une conduite de solvant (1) pouvant être raccordée à une réserve de solvant (20) pour l'amenée du solvant et une conduite d'évacuation (13) raccordée à la chambre de dissolution (4), laquelle peut être reliée à la machine de préparation de boissons (15), **caractérisé par** une unité de piston (5, 6, 18), laquelle comprend un premier piston (6) pouvant être introduit dans la chambre de dissolution (4), un deuxième piston (5) disposé mobile dans une préchambre (3) et une conduite de liaison (18) disposée entre le premier piston (6) et le deuxième piston (5), dans lequel la conduite de liaison (18) relie le premier piston (6) et le deuxième piston (5), de sorte qu'un mouvement du deuxième piston (5) est transmis au premier piston (6).

2. Dispositif selon la revendication 1, **caractérisé en ce que** le premier piston (6) est mobile entre une position de base (a), dans laquelle le premier piston (6) est sorti de la chambre de dissolution (4), et une position de fonctionnement (b), dans laquelle le premier piston (6) se trouve dans la chambre de dissolution (4).

3. Dispositif selon la revendication 1, **caractérisé en ce que** la préchambre (3) est disposée en amont de la chambre de dissolution (4) et est en liaison fluidique avec la chambre de dissolution (4) par l'intermédiaire de la conduite de liaison (18).

4. Dispositif selon l'une quelconque des revendications précédentes, **caractérisé en ce que** l'unité de piston (5, 6, 18) comprend un élément ressort (7) disposé entre le premier piston (6) et le deuxième piston (5) et en particulier autour de la conduite de liaison (18), dans lequel l'élément ressort (7) dans un état non sollicité exerce une précontrainte sur le premier piston (6), qui maintient le premier piston (6) dans une position de base (a) dans laquelle le premier piston (6) est sorti de la chambre de dissolution (4).

5. Dispositif selon la revendication 4, **caractérisé en ce que** le premier piston (6) lors d'une amenée de solvant à travers la conduite de solvant (1) est mobile à l'encontre d'une précontrainte produite par l'élément ressort (7) à partir d'une position de base (a) dans une position de fonctionnement (b) dans laquelle le premier piston (6) se trouve dans la chambre de dissolution (4).

6. Dispositif selon l'une quelconque des revendications précédentes, **caractérisé en ce que** la préchambre (3) présente une plus grande section transversale et en particulier un plus grand diamètre que la chambre de dissolution (4) et/ou que le deuxième piston (5) présente une plus grand section transversale et en particulier un plus grand diamètre que le premier piston (6).

7. Dispositif selon l'une quelconque des revendications précédentes, **caractérisé en ce que** l'appareil d'amenée (12) est disposé dans une zone supérieure ou sur une extrémité supérieure de la chambre de dissolution (4) et en particulier présente une ouverture dans une paroi de la chambre de dissolution (4), dans lequel le premier piston (6) dans une position de fonctionnement (b) se trouve dans la chambre de dissolution (4) à un point tel qu'un accès à partir de l'ouverture dans la chambre de dissolution (4) est bloqué.

8. Dispositif selon l'une quelconque des revendications précédentes, **caractérisé en ce que** l'appareil d'amenée (12) comprend un dispositif de dosage, lequel dose la substance active dans la chambre de dissolution (4).

9. Dispositif selon l'une quelconque des revendications précédentes, **caractérisé en ce que** la préchambre (3) est reliée à une conduite de gaz comprimé (2), dans lequel la conduite de gaz comprimé (2) peut être accouplée à une source de gaz comprimé (16) et de préférence débouche dans une partie supérieure ou sur une face supérieure dans la préchambre (3) ou dans la conduite de solvant (1).

10. Dispositif selon l'une quelconque des revendications précédentes, **caractérisé en ce qu'**un clapet antiretour (10) et/ou une soupape de régulation, en particulier une soupape de régulation de pression, et/ou un détendeur est disposé(e) dans la conduite de solvant (1) et/ou qu'un clapet antiretour et/ou une soupape de régulation (14) est disposé(e) dans la conduite d'évacuation (13).

11. Dispositif selon l'une quelconque des revendications précédentes, **caractérisé en ce qu'**une buse (11) est disposée dans la conduite de liaison (18).

12. Machine de préparation de boissons (15), en particulier machine à café ou machine pour l'obtention d'une boisson en poudre, avec un dispositif selon l'une quelconque des revendications précédentes, dans laquelle le dispositif est en particulier accouplé à un appareil d'infusion pour l'infusion d'une boisson chaude et/ou à un appareil pour le moussage de lait.

13. Procédé pour l'obtention et l'amenée d'une solution de substance active à une machine de préparation de boissons (15), en particulier une machine de préparation de boissons selon la revendication 12, dans lequel une solution composée d'une substance active et d'un solvant est tout d'abord obtenue dans une chambre de dissolution (4), du fait qu'une quantité déterminée d'une substance active (8) est dosée dans la chambre de dissolution (4) et ensuite un solvant est acheminé dans la chambre de dissolution (4) par l'intermédiaire d'une conduite de solvant (1) pouvant être raccordée à une réserve de solvant (20), ce qui a pour effet que la substance active (8) est dissoute dans le solvant en une solution de substance active, et la solution de substance active est ensuite amenée à la machine de préparation de boissons (15) par l'intermédiaire d'une conduite d'évacuation (13) raccordée à la chambre de dissolution (4), **caractérisé en ce qu'**après le dosage de la substance active dans la chambre de dissolution (4) un premier piston (6) est inséré dans la chambre de dissolution (4) et pressé dans la chambre de dissolution (4) par une pression produite par le solvant introduit.

14. Procédé selon la revendication 13, **caractérisé en ce que** le solvant est introduit dans la chambre de dissolution (4) au moyen d'une conduite de liaison (18) s'étendant à travers le premier piston (6), dans lequel le premier piston (6) est accouplé à un deuxième piston (5) disposé mobile dans une préchambre (3) par l'intermédiaire de la conduite de liaison (18).

15. Procédé selon la revendication 14, **caractérisé en ce que** la chambre de dissolution (4) est accouplée par liaison fluidique à la préchambre (3) par l'intermédiaire de la conduite de liaison (18) et la conduite de solvant (1) est reliée à la préchambre (3), dans lequel le deuxième piston (5) lors d'une amenée de solvant à travers la conduite de solvant (1) est pressé dans la préchambre (3) par une pression produite par le solvant introduit.
